# EUROPÄISCHE PATENTSCHRIFT

(11) **EP 2 684 335 B1**
(45) Veröffentlichungstag und Bekanntmachung des Hinweises auf die Patenterteilung: **25.04.2018**
(21) Anmeldenummer: 11709365.8
(22) Anmeldetag: 09.03.2011
(51) Int. Cl.: H04L 29/08, G05B 19/418

(54) **ENERGIEAUTOMATISIERUNGSANLAGE UND VERFAHREN ZUM BETREIBEN EINER ENERGIEAUTOMATISIERUNGSANLAGE**
POWER AUTOMATION INSTALLATION AND METHOD FOR OPERATING A POWER AUTOMATION INSTALLATION
INSTALLATION D'AUTOMATISATION D'ÉNERGIE ET PROCÉDÉ SERVANT À FAIRE FONCTIONNER UNE INSTALLATION D'AUTOMATISATION D'ÉNERGIE

(43) Veröffentlichungstag der Anmeldung: 15.01.2014
(73) Patentinhaber: Siemens Aktiengesellschaft, 80333 München (DE)
(72) Erfinder: ENGLERT, Heiko, 90559 Burgthann (DE); DAWIDCZAK, Henry, 91580 Petersaurach (DE); DUFAURE, Thierry, 12053 Berlin (DE)
(86) Internationale Anmeldenummer: PCT/EP2011/053524
(87) Internationale Veröffentlichungsnummer: WO 2012/119648

(56) Entgegenhaltungen:
- WO-A1-2009/049656
- US-A1- 2002 046 263

## Beschreibung

Die Erfindung betrifft ein Verfahren zum Betreiben einer Energieautomatisierungsanlage, die eine Mehrzahl von Energieautomatisierungsgeräten und zumindest eine übergeordnete Anlagensteuereinrichtung zum Steuern und/oder Überwachen der Energieautomatisierungsgeräte umfasst, sowie eine entsprechende Energieautomatisierungsanlage.

Ein solches Verfahren bzw. eine solche Energieautomatisierungsanlage ist aus der WO 2009/049656 A1 bekannt.

Der Betrieb elektrischer Energieversorgungsnetze wird durch sogenannte Energieautomatisierungsanlagen gesteuert. Diese weisen üblicherweise eine oder mehrere übergeordnete Anlagensteuereinrichtungen (z.B. sogenannte Energiemanagementsysteme, die in Netzleitstellen vorgesehen sind) auf, die mit mehreren Energieautomatisierungsgeräten (auch als IED = "Intelligent Electronic Device" bezeichnet) in Verbindung stehen und diese zum Gewährleisten des Betriebs des Energieversorgungsnetzes steuern und/oder überwachen können.

Während sich die Funktion von Energieautomatisierungsanlagen in der Vergangenheit üblicherweise für einen klassischen Betrieb der Energieversorgungsnetze auf die Steuerung und Überwachung von Schaltanlagen und/oder Umspannwerken auf der Hoch- oder Mittelspannungsebene beschränkte, werden für zukünftige - auch unter dem Sammelbegriff "Smart Grid Applikationen" zusammengefasste - Betriebsweisen der Energieversorgungsnetze auch Steuerungen und Überwachungen der Verteilnetze auf Mittel- und Niederspannungsebene in die Automatisierung eingebunden, um beispielsweise sogenannte "Demand Response Funktionen", also eine direkte oder indirekte Beeinflussung der Endverbraucher im Energieversorgungsnetz, durchführen zu können.

Ein Beispiel einer solchen Energieautomatisierungsanlage ist der WO 2008/148418 A1 zu entnehmen, bei der eine Energieverteileinrichtung über sogenannte Vorschaltgeräte mit einer Mehrzahl von Energieverbrauchseinrichtungen verbunden ist und diese über variierende Energieabnahmebedingungen hinsichtlich ihres Verbrauchsverhaltens beeinflusst.

In Szenarien für zukünftige Smart Grid Applikationen wird angenommen, dass im elektrischen Verteilnetz das Zusammenspiel einer Vielzahl im Niederspannungs- und Mittelspannungsnetz angeordneter elektrischer Verbraucher und Erzeuger oder kombinierter Erzeuger/Verbraucher (sogenannte "Prosumer") durch intelligent arbeitende Energiemanagementsysteme gesteuert wird. Dazu ist es notwendig, dass Verbrauchern, Erzeugern und Prosumern zugeordneten Energieautomatisierungsgeräte einerseits und die Energiemanagementsysteme andererseits für den Betrieb des Energieversorgungsnetzes relevante Informationen über Kommunikationsnetze austauschen. Zum Datenaustausch kann beispielsweise der Kommunikationsstandard IEC 61850 herangezogen werden. Dieser Standard wird heute bereits umfassend in der Schaltanlagenautomatisierung eingesetzt, wie beispielsweise der WO 2010/034335 A1 entnommen werden kann.

Gegenüber der Schaltanlagenautomatisierung unterscheiden sich die Anwendungsszenarien zum Verteilnetz-Management unter anderem darin, dass die Anzahl der Energieautomatisierungsgeräte, die einer Anlagensteuereinrichtung (einem Energiemanagementsystem) zugeordnet sind, aufgrund der großen Menge an Verbrauchern, Erzeugern und Prosumern auf Verteilnetzebene mehrere Größenordnungen höher ist (ca. 10.000-1.000.000 Geräte) als in der Schaltanlagenautomatisierung (ca. 10-100 Geräte). Außerdem finden Konfigurationsänderungen, insbesondere durch Hinzufügen oder Entfernen von Energieautomatisierungsgeräten, beim Verteilnetz-Management wesentlich häufiger statt (bis zu mehrmals täglich) als bei der Schaltanlagenautomatisierung (ca. einmal jährlich).

Um den ordnungsgemäßen Betrieb einer Energieautomatisierungsanlage zu sichern, müssen alle Einheiten der Energieautomatisierungsanlage, also die Energieautomatisierungsgeräte und die Anlagensteuereinrichtung, durch entsprechende Konfigurationseinstellungen eingerichtet sein. Insbesondere muss die Konfiguration der Anlagensteuereinrichtung die in der Energieautomatisierungsanlage vorhandenen Energieautomatisierungsgeräte sowie ihre Funktionen und Einstellungen komplett widerspiegeln.

Bei der bisherigen Schaltanlagenautomatisierung erfolgt die Konfiguration der Anlagensteuereinrichtung manuell. Dies kann insbesondere aufgrund der überschaubaren Anzahl von Energieautomatisierungsgeräten in Schaltanlagen mit vertretbarem Aufwand durchgeführt werden. Im Zusammenhang mit dem Standard IEC 61850 ist die Vorgehensweise bei einer solchen Konfiguration beispielhaft in dem Handbuch "Ethernet & IEC 61850 - Start Up" der Siemens AG, Ausgabe 25.06.2009, Bestellnummer E50417-F1176-C324-A3, insbesondere im Kapitel 6 "Creating a Project and Structuring It" beschrieben. Hierbei wird mit einer Konfigurationssoftware manuell eine statische Konfigurationsdatei erzeugt. Die Übernahme einer neuen Konfiguration durch ein IEC 61850-Gerät (z.B. die Anlagensteuereinrichtung) erfolgt durch einen Neustart des Gerätes oder zumindest der spezifischen Funktion des IEC 61850-Geräts, womit eine Unterbrechung des Betriebsablaufs des Gesamtsystems verbunden ist. In Energieautomatisierungsanlagen mit einer vergleichsweise hohen Anzahl von Energieautomatisierungsgeräten ist eine manuelle Konfiguration nicht mehr praktikabel.

Der Erfindung liegt daher die Aufgabe zugrunde, die Konfiguration einer Energieautomatisierungsanlage, insbesondere einer Energieautomatisierungsanlage mit einer vergleichsweise hohen Anzahl von Energieautomatisierungsgeräten, zu vereinfachen und derart auszugestalten, dass möglichst keine Betriebsunterbrechung nötig ist.

Zur Lösung dieser Aufgabe wird ein Verfahren zum Betreiben einer Energieautomatisierungsanlage vorgeschlagen, die eine Mehrzahl von Energieautomatisierungsgeräten und zumindest eine übergeordnete Anlagensteuereinrichtung zum Steuern und/oder Überwachen der Energieautomatisierungsgeräte umfasst, wobei die Energieautomatisierungsgeräte mit der Anlagensteuereinrichtung über eine Konzentratoreinrichtung verbunden sind und in einer Speichereinrichtung der Konzentratoreinrichtung eine ein Konzentratordatenmodell enthaltende Datenmodelldatei gespeichert ist, und wobei das Konzentratordatenmodell Angaben über die mit der Konzentratoreinrichtung verbundenen Energieautomatisierungsgeräte, deren Funktionen und Einstellungen umfasst sowie Datenobjekte bereitstellt, deren Zustände an die aktuellen Zustände entsprechender Datenobjekte der Energieautomatisierungsgeräte angepasst werden. Bei dem Verfahren werden die folgenden Schritte durchgeführt:
- Verbinden eines zusätzlichen Energieautomatisierungsgerätes mit der Konzentratoreinrichtung;
- Erzeugen einer Kommunikationsadresse für das zusätzliche Energieautomatisierungsgerät durch die Konzentratoreinrichtung und Übermitteln der Kommunikationsadresse an das zusätzliche Energieautomatisierungsgerät;
- Speichern der Kommunikationsadresse im zusätzlichen Energieautomatisierungsgerät und Verwenden der Kommunikationsadresse für die weitere Kommunikation mit der Konzentratoreinrichtung;
- Abrufen einer Gerätebeschreibungsdatei von dem Energieautomatisierungsgerät durch die Konzentratoreinrichtung, die Funktionen und Einstellungen des zusätzlichen Energieautomatisierungsgerätes angibt;
- Anpassen des Konzentratordatenmodells an die durch die Gerätebeschreibungsdatei angegebenen Funktionen und Einstellungen des zusätzlichen Energieautomatisierungsgerätes; und
- Bereitstellen des angepassten Konzentratordatenmodells für die Anlagensteuereinrichtung.

Bei dem erfindungsgemäßen Verfahren wird einerseits der Konfigurationsaufwand durch das Vorsehen der sogenannten Konzentratoreinrichtung verringert, die sowohl für die Kommunikation als auch für die logische Bereitstellung von Daten ein Bindeglied zwischen der Anlagensteuereinrichtung und den einzelnen Energieautomatisierungsgeräten darstellt. Außerdem ermöglicht das erfindungsgemäße Verfahren in vorteilhafter Weise eine automatische Konfiguration des für die Bereitstellung aktueller Zustandsinformationen über die Energieautomatisierungsgeräte verwendeten Konzentratordatenmodells, indem nach einer automatischen Adressvergabe an ein neu hinzugefügtes Energieautomatisierungsgerät eine automatische Anpassung des Konzentratordatenmodells an die Funktionen und Einstellungen des zusätzlichen Energieautomatisierungsgerätes vorgenommen wird. Auf diese Weise kann einerseits ohne manuelle Eingriffe und andererseits ohne die Notwendigkeit einer Betriebsunterbrechung eine Konfiguration der Energieautomatisierungsanlage zur Anpassung an das zusätzliche Energieautomatisierungsgerät erreicht werden.

Das bei dem erfindungsgemäßen Verfahren durchgeführte Abrufen der Gerätebeschreibungsdatei kann hierbei entweder über einen sogenannten Filetransfer (z.B. FTP (FTP = File Transfer Protocol) oder MMS-Filetransfer (MMS = Manufacturing Messaging Specification)) erfolgen. Alternativ dazu kann die Bereitstellung einer Gerätebeschreibungsdatei in der Konzentratoreinrichtung aber auch über einen sogenannten Discovery Dienst erfolgen. Hierbei verwendet die Konzentratoreinrichtung selbst einen Sammeldienst, der die für die Gerätebeschreibungsdatei notwendigen Informationen durch Einzelabfragen ermittelt und zu einer Gerätebeschreibungsdatei zusammensetzt.

Eine vorteilhafte Ausführungsform des erfindungsgemäßen Verfahrens sieht vor, dass die Anlagensteuereinrichtung vor dem Verbinden des zusätzlichen Energieautomatisierungsgerätes mit der Konzentratoreinrichtung eine Benutzereingabe erfasst, die eine Gerätekennung des zusätzlichen Energieautomatisierungsgerätes angibt, nach dem Verbinden des zusätzlichen Energieautomatisierungsgerätes mit der Konzentratoreinrichtung das zusätzliche Energieautomatisierungsgerät seine Gerätekennung an die Konzentratoreinrichtung übermittelt, die Konzentratoreinrichtung die von dem zusätzlichen Energieautomatisierungsgerät übermittelte Gerätekennung an die Anlagensteuereinrichtung sendet, die Anlagensteuereinrichtung prüft, ob die von der Konzentratoreinrichtung übermittelte Gerätekennung mit der benutzerseitig eingegebenen Gerätekennung übereinstimmt und bei übereinstimmender Gerätekennung ein Bestätigungstelegramm an die Konzentratoreinrichtung sendet, und die Konzentratoreinrichtung nur dann die Gerätebeschreibungsdatei von dem zusätzlichen Energieautomatisierungsgerät abruft bzw. über einen Discovery Dienst ermittelt, wenn das Bestätigungstelegramm vorliegt.

Auf diese Weise kann mit lediglich geringfügigem manuellen Aufwand, nämlich der benutzerseitigen Eingabe einer Gerätekennung des zusätzlichen Energieautomatisierungsgerätes, das Hinzufügen des zusätzlichen Energieautomatisierungsgerätes autorisiert werden. Bei den bisher bekannten Verfahren müsste hierzu die gesamte Gerätebeschreibung des zusätzlichen Energieautomatisierungsgerätes in die Datenbank der Anlagensteuereinrichtung eingefügt werden, wodurch bisher ein hoher Konfigurationsaufwand entsteht und die Flexibilität der Energieautomatisierungsanlage eingeschränkt wird. Auf die erfindungsgemäße Weise wird zudem sichergestellt, dass kein Energieautomatisierungsgerät zu der Energieautomatisierungsanlage hinzugefügt wird, dessen Betrieb in der Automatisierungsanlage nicht benutzerseitig vorgesehen ist.

Eine weitere vorteilhafte Ausführungsform des erfindungsgemäßen Verfahrens sieht vor, dass die Anlagensteuereinrichtung eine ein Anlagendatenmodell enthaltende Anlagendatenmodelldatei umfasst, wobei das Anlagendatenmodell Angaben über alle Energieautomatisierungsgeräte der Energieautomatisierungsanlage, deren Funktionen und Einstellungen umfasst sowie Datenobjekte bereitstellt, deren Zustände an die aktuellen Zustände entsprechender Datenobjekte der Energieautomatisierungsgeräte angepasst werden, die Anlagensteuereinrichtung ihr Anlagendatenmodell an die durch das erweiterte Konzentratordatenmodell angegebenen Funktionen und Einstellungen des zusätzlichen Energieautomatisierungsgerätes anpasst, und im Betrieb der Energieautomatisierungsanlage eine Änderung eines Zustands eines Datenobjektes eines mit der Konzentratoreinrichtung verbundenen Energieautomatisierungsgerätes eine entsprechende Änderung der Zustände der entsprechenden Datenobjekte des Konzentratordatenmodells und des Anlagendatenmodells bewirkt.

Auf diese Weise können die jeweiligen Zustände der einzelnen Energieautomatisierungsgeräte besonders einfach über die Konzentratoreinrichtung an die Anlagensteuereinrichtung weitergegeben werden. Im laufenden Betrieb müssen nämlich lediglich die Datenobjekte des Konzentratordatenmodells an die Datenobjekte der Energieautomatisierungsgeräte sowie die Datenobjekte des Anlagendatenmodells der Anlagensteuereinrichtung an den Zustand der Datenobjekte des Konzentratordatenmodells angepasst werden.

Gemäß einer vorteilhaften Ausführungsform ist in diesem Zusammenhang vorgesehen, dass die Anlagensteuereinrichtung zunächst die in dem Konzentratordatenmodell enthaltenen Angaben über Funktionen und Einstellungen des zusätzlichen Energieautomatisierungsgerätes daraufhin überprüft, ob diese mit dem Anlagendatenmodell kompatibel sind, und erst bei vorliegender Kompatibilität das Anlagendatenmodell an das Konzentratordatenmodell anpasst und ein Aktivierungstelegramm an die Konzentratoreinrichtung sendet, und dass die Konzentratoreinrichtung erst bei vorliegendem Aktivierungstelegramm das zusätzliche Energieautomatisierungsgerät in den Betrieb der Energieautomatisierungsanlage einbindet.

Hierdurch kann sichergestellt werden, dass die Energieautomatisierungsanlage mit dem zusätzlichen Energieautomatisierungsgerät den Betrieb aufnehmen kann, da vor der Aufnahme des Betriebes die Kompatibilität der Datenobjekte des hinzugefügten Energieautomatisierungsgerätes mit dem Anlagendatenmodell in der Anlagensteuereinrichtung überprüft wird. Lediglich dann, wenn diesbezüglich Kompatibilität festgestellt wird, wird die Freigabe zur Inbetriebnahme des zusätzlichen Energieautomatisierungsgerätes gegeben.

Gemäß einer weiteren vorteilhaften Ausführungsform des erfindungsgemäßen Verfahrens ist vorgesehen, dass beim Entfernen eines Energieautomatisierungsgerätes aus der Energieautomatisierungsanlage die Konzentratoreinrichtung die fehlende Verbindung zu dem entfernten Energieautomatisierungsgerät erkennt und sein Konzentratordatenmodell durch Entfernen der Einträge für das entfernte Energieautomatisierungsgerät anpasst und das angepasste Konzentratordatenmodell an die Anlagensteuereinrichtung übermittelt, und dass die Anlagensteuereinrichtung ihr Anlagendatenmodell durch Entfernen der Einträge für das entfernte Energieautomatisierungsgerät anpasst.

Auf diese Weise kann die Konfiguration der Energieautomatisierungsanlage nicht nur an neu hinzugefügte, sondern an entfernte Energieautomatisierungsgeräte angepasst werden.

Eine weitere vorteilhafte Ausführungsform des erfindungsgemäßen Verfahrens sieht vor, dass die Gerätebeschreibungsdatei des zusätzlichen Energieautomatisierungsgerätes in Form einer ICD-Datei oder IID-Datei gemäß dem Standard IEC 61850 angegeben wird. Zudem kann vorgesehen sein, dass das Konzentratordatenmodell der Konzentratoreinrichtung in Form einer SCD-Datei gemäß dem Standard IEC 61850 angegeben wird, und dass das Anlagendatenmodell der Anlagensteuereinrichtung in Form einer SCD-Datei gemäß dem Standard IEC 61850 angegeben wird.

Der Standard IEC 61850 stellt mittlerweile einen weit verbreiteten und erprobten Standard zur Kommunikation in Schaltanlagen von Energieversorgungsnetzen dar und ist daher gut dafür geeignet, auch bei dem erfindungsgemäßen Verfahren eingesetzt zu werden. ICD, IID und SCD stellen Beschreibungsdateien gemäß der IEC 61850 dar, die unter Benutzung der Beschreibungssprache SCL (Substation Configuration Language) erstellt werden.

Gegenüber der Anlagensteuereinrichtung repräsentiert sich die Konzentrationseinrichtung wiederum SCL-basiert als ICD oder IID. In Richtung der unterlagerten Energieautomatisierungsgeräte kann die Konfigurationsdatei in der Konzentratoreinrichtung als SCD Beschreibung angegeben werden.

Die oben genannte Aufgabe wird schließlich auch durch eine Energieautomatisierungsanlage mit einer Mehrzahl von Energieautomatisierungsgeräten zumindest einer Anlagensteuereinrichtung zum Steuern und/oder Überwachen der Energieautomatisierungsgeräte gelöst, wobei die Energieautomatisierungsgeräte mit der Steuereinrichtung über eine Konzentratoreinrichtung verbunden sind. Erfindungsgemäß ist die Energieautomatisierungsanlage zur Durchführung eines Verfahrens gemäß einem der Ansprüche 1 bis 8 eingerichtet.

Die Erfindung wird nachfolgend anhand von Ausführungsbeispielen näher erläutert. Hierzu zeigen:
- Fig. 1: eine schematische Ansicht eines ersten Ausführungsbeispiels einer Energieautomatisierungsanlage,
- Fig. 2: eine Erläuterung der Funktionsweise eines Konzentratordatenmodells,
- Fig. 3: eine schematische Ansicht eines zweiten Ausführungsbeispiels einer Energieautomatisierungsanlage, und
- Fig. 4: ein Blockschaltbild der Energieautomatisierungsanlage nach Fig. 1 zur Erläuterung der Funktionsweise einer automatischen Konfigurierung.

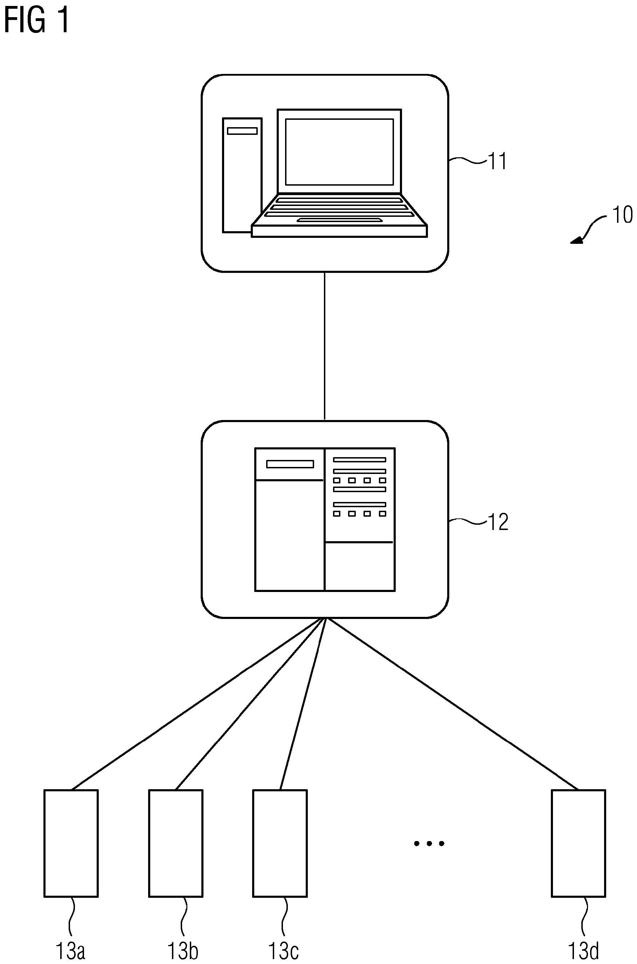

Fig. 1 zeigt ein erstes Ausführungsbeispiel einer Energieautomatisierungsanlage 10. Die Energieautomatisierungsanlage 10 umfasst eine Anlagensteuereinrichtung 11, die über eine Konzentratoreinrichtung 12 mit mehreren Energieautomatisierungsgeräten 13a bis 13d verbunden ist. Bei den Energieautomatisierungsgeräten 13a bis 13d kann es sich beispielsweise um elektrische Messgeräte, Power Quality Geräte, intelligente Energiezähler (sogenannte "Smart Meter"), Aktuatoren wie z.B. intelligente Schalteinrichtungen, Schutzgeräte oder Steuergeräte handeln. Solche Energieautomatisierungsgeräte können zusammengefasst als IEDs ("Intelligent Electronic Devices") bezeichnet werden und dienen allgemein zur Aufnahme von einen Zustand eines elektrischen Energieversorgungsnetzes beschreibenden Zustandswerten und/oder zur Beeinflussung des elektrischen Energieversorgungsnetzes. Dazu werden sie üblicherweise in unmittelbarer Nähe zu der von ihnen überwachten oder beeinflussten Komponente des Energieversorgungsnetzes angeordnet. Das elektrische Energieversorgungsnetz selbst ist in Fig. 1 der besseren Übersichtlichkeit halber nicht dargestellt.

Bei der Energieautomatisierungsanlage 10 gemäß Fig. 1 kann es sich beispielsweise um eine (klassische) Energieautomatisierungsanlage zur Steuerung und Überwachung einer Schaltanlage oder einer Transformatorstation in dem elektrischen Energieversorgungsnetz handeln. In diesem Fall umfasst die Energieautomatisierungsanlage 10 üblicherweise eine vergleichsweise übersichtliche Anzahl von Energieautomatisierungsgeräten (beispielsweise 10 bis 100 Geräte). Bei der Energieautomatisierungsanlage 10 kann es sich jedoch um eine im Rahmen sogenannter Smart Grid Applikationen eingesetzte Energieautomatisierungsanlage zur Steuerung und Überwachung eines Verteilnetzes eines elektrischen Energieversorgungsnetzes handeln, wobei dieser Verteilnetzabschnitt üblicherweise im Mittelspannungs- und Niederspannungsbereich des Energieversorgungsnetzes angeordnet ist. Neben den klassischerweise vorhandenen Energieverbrauchern können bei solchen Smart Grid Applikationen Verteilnetz in der Mittelspannung- und Niederspannungsebene auch Energieerzeuger (beispielsweise eine Photovoltaik-Anlage auf dem Dach eines Einfamilienhauses oder eine Biogasanlage eines Agrarbetriebes) oder sogenannte "Prosumer" vorgesehen sein, die eine Kombination von Energieerzeugern ("Producer") und Energieverbrauchern ("Consumer") darstellen. Da solche Einheiten in einem elektrischen Energieversorgungsnetz in einer großen Anzahl auftreten, weist eine Energieautomatisierungsanlage für die Verteilnetzautomatisierung entsprechend viele Energieautomatisierungsgeräte auf, die den einzelnen Erzeugern, Verbrauchern oder Prosumern zugeordnet sind; eine solche Energieautomatisierungsanlage kann beispielsweise 10.000 bis 1.000.000 Energieautomatisierungsgeräte aufweisen.

Die Aufgabe der Konzentratoreinrichtung 12 ist es, quasi als Bindeglied zwischen der Anlagensteuereinrichtung 11 und den einzelnen Energieautomatisierungsgeräten 13a bis 13d zu fungieren und einerseits Informationen über Zustandsveränderungen der einzelnen Energieautomatisierungsgeräte (beispielsweise die Veränderung einer Schalterstellung von offen nach geschlossen) zu sammeln und andererseits diese Informationen in geeigneter Form der Anlagensteuereinrichtung 11 zur Verfügung zu stellen. Die Konzentratoreinrichtung 12 stellt somit sowohl einen kommunikationstechnischen als auch logischen Vertreter mehrerer Energieautomatisierungsgeräte gegenüber der Anlagensteuereinrichtung dar.

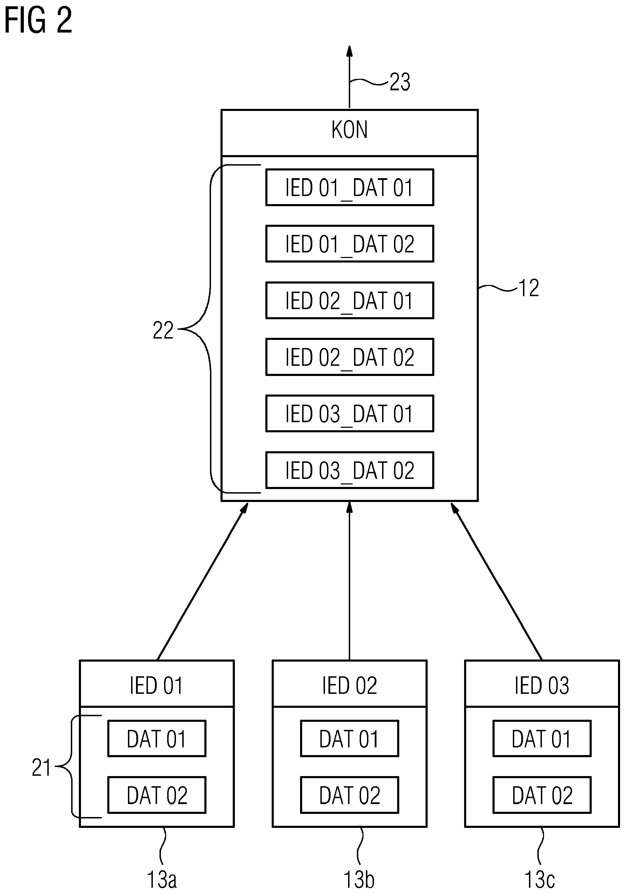

Dieses Prinzip soll anhand von Fig. 2 beispielhaft erläutert werden. Fig. 2 zeigt hierzu beispielhaft drei Energieautomatisierungsgeräte, die mit dem Namen "IED 01", "IED 02" und "IED 03" bezeichnet sind. Bei diesen Energieautomatisierungsgeräten soll es sich beispielhaft um die Energieautomatisierungsgeräte 13a, 13b und 13c gemäß Fig. 1 handeln. Ferner zeigt Fig. 2 eine Konzentratoreinrichtung, die mit dem Namen "KON" bezeichnet ist und bei der es sich um die Konzentratoreinrichtung 12 gemäß Fig. 1 handeln kann. Das Energieautomatisierungsgerät 13a umfasst verschiedene Gerätefunktionen, die in der Gerätesoftware des Energieautomatisierungsgerätes 13a durch eine Gerätebeschreibung 21 mit einem Datenmodell wiedergegeben werden. Die Gerätebeschreibung 21 des Energieautomatisierungsgerätes 13a weist gemäß Fig. 2 lediglich beispielhaft zwei Datenobjekte "DAT 01" und "DAT 02" auf, die wiederum unterschiedliche Zustände einnehmen können. Beispielsweise kann es sich bei dem Energieautomatisierungsgerät 13a um ein elektrisches Messgerät handeln, das an einer Messstelle des elektrischen Energieversorgungsnetzes einen elektrischen Strom erfasst. Bei dem ersten Datenobjekt "DAT 01" kann es sich dann beispielsweise um den Wert des gemessenen Stromes handeln, während das zweite Datenobjekt "DAT 02" einen Betriebszustand des elektrischen Energieautomatisierungsgerätes 13a beschreibt. Das Datenobjekt "DAT 01" kann folglich entsprechend dem gemessenen Strom unterschiedliche Zahlenwerte annehmen, während das zweite Datenobjekt "DAT 02" beispielsweise die Zustände "aktiv", "Standby", "Wartung", "Test" oder "Fehler" annehmen kann.

In entsprechender Weise weisen die weiteren Energieautomatisierungsgeräte 13b und 13c eine jeweilige Gerätebeschreibung mit eigenen Datenobjekten, ebenfalls mit "DAT 01" und "DAT 02" bezeichnet, auf, die wiederum unterschiedliche Zustände einnehmen können.

Die Konzentratoreinrichtung 11 umfasst eine (in Fig. 2 nicht explizit gezeigte) Datenspeichereinrichtung, in der eine Datenmodelldatei gespeichert ist, die ein Datenmodell 22 der Konzentratoreinrichtung 12 angibt. Das Konzentratordatenmodell 22 umfasst Angaben über die mit der Konzentratoreinrichtung 12 verbundenen Energieautomatisierungsgeräte 13a-c, dazu deren Funktionen und Einstellungen, und umfasst außerdem Informationen über die Zustände der einzelnen Energieautomatisierungsgeräte 13a-c, indem sie die einzelnen Datenobjekte der jeweiligen Energieautomatisierungsgeräte 13a-c wiedergibt und an den jeweiligen Zustand der entsprechenden Datenobjekte der Energieautomatisierungsgeräte 13a-c anpasst.

Wie Fig. 2 entnommen werden kann, weist das Konzentratordatenmodell 22 beispielsweise den Datenobjekten "DAT 01" und "DAT 02" des ersten Energieautomatisierungsgerätes 13a entsprechende Einträge auf, die hier mit den Namen "IED 01_DAT 01" bzw. "IED 01_DAT 02" bezeichnet sind. Entsprechende Einträge sind für die Datenobjekte der übrigen Energieautomatisierungsgeräte 13b und 13c vorhanden. Auf diese Weise kann einerseits über die Struktur des Konzentratordatenmodells 22 eine Angabe über die mit der Konzentratoreinrichtung 12 verbundenen Energieautomatisierungsgeräte sowie ihre Funktionen gemacht werden und andererseits ein genaues Abbild der Zustände der einzelnen Datenobjekte der jeweiligen Energieautomatisierungsgeräte wiedergegeben werden.

Zustandsänderungen der einzelnen Datenobjekte der Energieautomatisierungsgeräte 13a-c werden in den Gerätebeschreibungen der einzelnen Feldgeräte eingetragen und an das Konzentratordatenmodell gemeldet. Dies kann beispielsweise ereignisbezogen immer dann geschehen, wenn eine Änderung des Zustands einzelner Datenobjekte auftritt, oder regelmäßig bei einem Update des Zustands eines Datenobjektes, also auch dann, wenn keine Zustandsänderung eingetreten ist, erfolgen. In entsprechender Weise werden Zustandsänderungen bzw. -updates an das Anlagendatenmodell übermittelt.

Analog zu der beschriebenen Funktionsweise können auch Steuerbefehle von der Anlagensteuereinrichtung an die Energieautomatisierungsgeräte übermittelt werden, indem im Anlagendatenmodell gezielt Zustandswerte verändert werden und diese Veränderung in über eine entsprechende Anpassung des Konzentratordatenmodells an die Gerätebeschreibungen der von der Änderung betroffenen Energieautomatisierungsgeräte übermittelt wird. Solche Steuerhandlungen können natürlich nur bei geeigneten Datenobjekten (z.B. Schalterposition) dafür eingerichteter Energieautomatisierungsgeräte (z.B. Schalteinrichtungen) durchgeführt werden.

Beispielsweise kann es sich bei den Gerätebeschreibungen der einzelnen Energieautomatisierungsgeräte 13a-c um gemäß dem Standard IEC 61850 aufgebaute ICD-Dateien (Intelligent Electronic Device Capability Description) oder IID-Dateien (Instanciated IED Description)und bei dem Konzentratordatenmodell um eine gemäß dem Standard IEC 61850 aufgebaute SCD-Datei (Substation Configuration Description) handeln, die unter Verwendung der sogenannten Substation Configuration Language (SCL) eine strukturierte Angabe über Aufbau, Funktionen und Zustände der jeweiligen Energieautomatisierungsgeräte angeben. Es kann jedoch auch der Fall eintreten, dass die Gerätebeschreibungen nicht in einer SCL-basierten strukturierten Datei angegeben sind.

Wie durch einen Pfeil 23 in Fig. 2 gekennzeichnet wird, stellt die Konzentratoreinrichtung 12 ihr Konzentratordatenmodell 22 der übergeordneten Anlagensteuereinrichtung (in Fig. 2 der Übersichtlichkeit halber nicht darstellt) zur Verfügung. Die Anlagensteuereinrichtung weist ein Anlagendatenmodell auf, das Angaben über alle Energieautomatisierungsgeräte der Energieautomatisierungsanlage entsprechend der zu dem Konfigurationsdatenmodell gemachten Ausführungen umfasst. Das Anlagenmodell weist folglich auch Angaben über weitere Energieautomatisierungsgeräte auf, die nicht über die beschriebene Konzentratoreinrichtung 12 mit der Anlagensteuereinrichtung verbunden sind, beispielsweise da sie über weitere Konzentratoreinrichtungen oder direkt mit der Anlagensteuereinrichtung verbunden sind. Bei dem Anlagendatenmodell kann es sich ebenfalls um eine gemäß dem Standard IEC 61850 aufgebaute SCD-Datei handeln. Gegenüber der Anlagensteuereinrichtung repräsentiert sich die Konzentrationseinrichtung wiederum SCL-basiert als ICD oder IID. In Richtung der unterlagerten Energieautomatisierungsgeräte kann die Konfigurationsdatei in der Konzentratoreinrichtung als SCD Beschreibung angegeben werden.

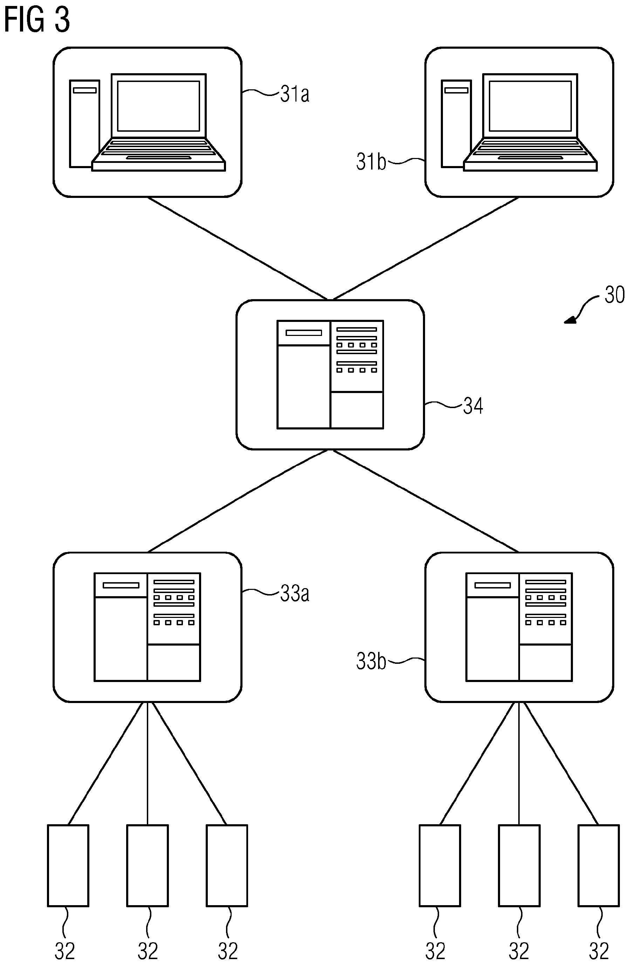

Fig. 3 zeigt ein zweites Ausführungsbeispiel einer Energieautomatisierungsanlage 30, die einerseits zwei (z.B. redundant zueinander ausgeführte) Anlagensteuereinrichtungen 31a und 31b sowie mehrere Energieautomatisierungsgeräte 32 aufweist. Die Energieautomatisierungsgeräte 32 sind in dem Ausführungsbeispiel gemäß Fig. 3 über eine Kaskade von drei Konzentratoreinrichtungen 33a, 33b und 34 mit den Anlagensteuereinrichtungen 31a und 31b verbunden, wobei die Konzentratoreinrichtungen 33a und 33b eine untere Hierarchieebene bilden und die Konzentratoreinrichtung 34 den Konzentratoreinrichtungen 33a und 33b übergeordnet ist. Solche kaskadierten Anordnungen von Konzentratoreinrichtungen können insbesondere bei Energieautomatisierungsanlagen mit einer großen Anzahl von Energieautomatisierungsgeräten 32, die weit verteilt angeordnet sind, eingesetzt werden. Die Betriebsweise entspricht jedoch im Wesentlichen der zu Fig. 1 erläuterten Betriebsweise; hier ist lediglich eine weitere Übertragungsebene durch die Kaskadenanordnung der Konzentratoreinrichtungen zu berücksichtigen.

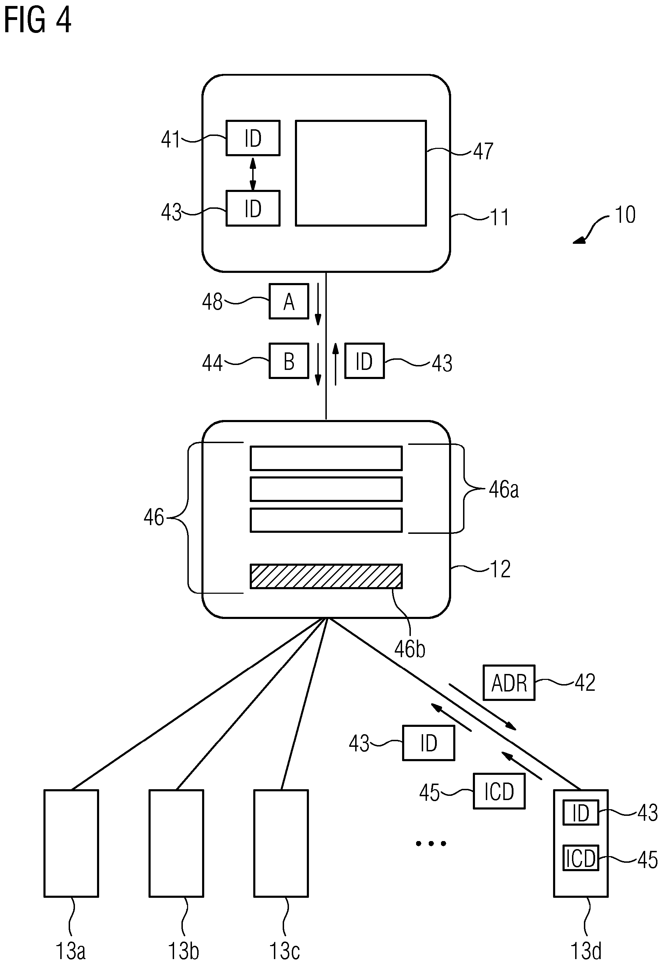

Zur Sicherstellung eines ordnungsgemäßen Betriebs der Energieautomatisierungsanlage müssen alle Komponenten, also insbesondere die Konzentratoreinrichtung und die Anlagensteuereinrichtung, durch entsprechende Konfiguration an die tatsächlichen Gegebenheiten, insbesondere an die tatsächlich aktuell mit der Konzentratoreinrichtung verbundenen Energieautomatisierungsgeräte, angepasst werden. Anhand von Fig. 4 soll nun ein Ausführungsbeispiel erläutert werden, wie insbesondere in Energieautomatisierungsanlagen mit einer sehr großen Anzahl von Energieautomatisierungsgeräten, in effizienter Weise eine Anpassung der Konfiguration sowohl der Konzentratoreinrichtung als auch der Anlagensteuereinrichtung vorgenommen werden kann, ohne den Betriebsablauf der Energieautomatisierungsanlagen unterbrechen zu müssen.

Hierzu zeigt Fig. 4 die vergleichsweise einfache Energieautomatisierungsanlage 10 gemäß Fig. 1, die die Anlagensteuereinrichtung 11, die Konzentratoreinrichtung 12 sowie zunächst die drei Energieautomatisierungsgeräte 13a, 13b und 13c umfasst. In diesem Aufbau kann die Energieautomatisierungsanlage 10 betrieben werden, d. h. die Konfiguration sowohl der Konzentratoreinrichtung 12 als auch der Anlagensteuereinrichtung 11 ist an die einzelnen Energieautomatisierungsgeräte 13a-c sowie ihre Funktionen und Einstellungen angepasst, und es können die einzelnen Zustände der Datenobjekte der jeweiligen Energieautomatisierungsgeräte 13a-c sowohl an die Konzentratoreinrichtung 12 als auch an die Anlagensteuereinrichtung 11 (und zur Steuerung ggf. in umgekehrter Richtung) weitergegeben werden.

Für die folgenden Ausführungen soll nun angenommen werden, dass ein zusätzliches Energieautomatisierungsgerät 13d der Energieautomatisierungsanlage 10 hinzugefügt werden soll, beispielsweise um einen neuen Elektroenergiezähler (z.B. einen "Smart Meter") in die Energieautomatisierungsanlage 10 zu integrieren. Zusätzlich soll angenommen werden, dass die einzelnen Komponenten der Energieautomatisierungsanlage 10 zur Kommunikation gemäß dem Standard IEC 61850 eingerichtet sind, dabei verfügen die Energieautomatisierungsgeräte 13a-c und 13d über IEC 61850-Server Funktionalität, die Konzentratoreinrichtung sowohl über IEC 61850 Client-Funktionalität als auch über IEC 61850-Server Funktionalität und die Anlagensteuereinrichtung über IEC 61850-Client Funktionalität. Das zusätzliche Energieautomatisierungsgerät 13d besitzt eine eindeutige Gerätekennung und die IEC 61850-Gerätebeschreibung des zusätzliche Energieautomatisierungsgeräts 13d über mindestens ein IEC 61850-Datenobjekt, das kompatibel mit dem Anlagendatenmodell der Anlagensteuereinrichtung 11 ist, also z.B. als Typ in der Anlagensteuereinrichtung 11 hinterlegt ist. Alternativ kann jedoch auch der Fall eintreten, dass die Datenobjekte nicht in einer SCL-basierten strukturierten Datei angegeben sind. Die Konzentratoreinrichtung 12 weist ein Konzentratordatenmodell 46 auf, das zunächst Datenobjekte 46a der bereits vorhandenen Energieautomatisierungsgeräte 13a-c umfasst. Die Energieautomatisierungsanlage 10 befindet sich im Betriebsmodus. Die Funktionsweise zur Anpassung der Konfigurierung der Konzentratoreinrichtung 12 und der Anlagensteuereinrichtung 11 ist nun wie folgt:
Zunächst wird die Gerätekennung 41 des zusätzlichen Energieautomatisierungsgeräts 13d durch eine Benutzereingabe in der Anlagensteuereinrichtung hinterlegt. Dann wird das Energieautomatisierungsgerät 13d physikalisch an das Netzwerk der Konzentratoreinrichtung 12 angeschlossen. Daraufhin erzeugt die Konzentratoreinrichtung 12 eine IEC 61850-Netzwerkadresse, weist diese dem zusätzlichen Energieautomatisierungsgerät 13d zu (z.B. über ein DHCP-Verfahren) und übermittelt die Adresse 42 an das zusätzliche Energieautomatisierungsgerät 13d. Für die weitere Kommunikation mit der Konzentratoreinrichtung 12 verwendet das zusätzliche Energieautomatisierungsgerät 13d nunmehr diese Adresse.

Danach liest die Konzentratoreinrichtung 12 die Gerätekennung 43 des zusätzlichen Energieautomatisierungsgerätes 13d (z.B. über IEC 61850 aus einer typisierter "Nameplate-Information" auf Basis eines IEC 61850-Profils) aus dem zusätzlichen Energieautomatisierungsgerät 13d aus (dies kann beispielsweise über einen FTP oder MMS-Filetransfer erfolgen) und sendet diese Gerätekennung 43 an die Anlagensteuereinrichtung 11, die sie mit der über die Benutzereingabe vorgegebenen Gerätekennung 41 vergleicht. Bei Übereinstimmung der beiden Gerätekennungen 41 und 43 sendet die Anlagensteuereinrichtung 11 ein Bestätigungstelegramm 44 an die Konzentratoreinrichtung 12. Erst bei vorliegendem Bestätigungstelegramm 44 liest die Konzentratoreinrichtung eine Gerätebeschreibungsdatei 45 (z.B. in Form einer ICD-Datei oder einer IID-Datei gemäß IEC 61850) aus dem zusätzlichen Energieautomatisierungsgerät 13d aus und fügt die in der Gerätebeschreibung 45 enthaltenen Datenobjekte als zusätzliche Datenobjekte 46b in sein Konzentratordatenmodell 46 ein.

Alternativ zu der beschriebenen Vorgehensweise kann die Bereitstellung der Gerätebeschreibungsdatei in der Konzentratoreinrichtung auch über einen sogenannten Discovery Dienst erfolgen. Hierbei verwendet die Konzentratoreinrichtung selbst einen Sammeldienst, der die für die Gerätebeschreibungsdatei notwendigen Informationen durch Einzelabfragen ermittelt und zu einer Gerätebeschreibungsdatei zusammensetzt. Dies eignet sich insbesondere dann, wenn die Datenobjekte der Energieautomatisierungsgeräte nicht in SCL-basierter strukturierter Form (z.B. als ICD oder IID) vorliegen.

Die Konzentratoreinrichtung 12 meldet daraufhin der Anlagensteuereinrichtung 11, dass das Konzentratordatenmodell 46 geändert worden ist und zum Auslesen bereit steht. Die Anlagensteuereinrichtung 11 liest aus der Konzentratoreinrichtung 12 die neu hinzugefügten Datenobjekte 46b des zusätzlichen Energieautomatisierungsgerätes 13d aus und untersucht diese Datenobjekte 46b hinsichtlich Kompatibilität mit seinem eigenen Anlagendatenmodell 47, beispielsweise indem die Datenobjekte 46b mit den hinterlegten Typen des Anlagendatenmodells 47 verglichen werden. Bei vorliegender Kompatibilität bestätigt die Anlagensteuereinrichtung 11 die Konsistenz der neuen Datenobjekte 46b und damit die Betriebsbereitschaft der Energieautomatisierungsanlage 10 in der geänderten Form durch Versenden eines Aktivierungstelegramms 48 an die Konzentratoreinrichtung 12.

Die Konzentratoreinrichtung 12 integriert bei vorliegendem Aktivierungstelegramm 48 das zusätzliche Energieautomatisierungsgerät 13d aktiv in den Betriebsablauf der Energieautomatisierungsanlage 10, womit die Konfigurationseinstellungen abgeschlossen sind.

Zu berücksichtigen ist, dass die Eingabe und Prüfung der Gerätekennung des zusätzlichen Energieautomatisierungsgerätes 13d sowie die Kompatibilitätsprüfung der hinzugefügten Datenobjekte mit dem Anlagendatenmodell vorteilhafte, aber dennoch optionale Ausgestaltungen des beschriebenen Verfahrens darstellen.

Beim Entfernen eines Energieautomatisierungsgerätes werden entsprechend die Einträge der jeweiligen Datenobjekte in dem Konzentratordatenmodell und dem Anlagendatenmodell gelöscht oder inaktiv gesetzt.

Zusammengefasst ergeben sich bei Anwendung des erfindungsgemäßen Verfahrens folgende Vorteile: Durch eine automatische Konfiguration der Konzentratoreinrichtung entfällt die manuelle Konfiguration und verringert sich der Engineeringaufwand bei Änderungen der gesamten Systemkonfiguration. Die automatische Konfiguration erfolgt zur Laufzeit der Energieautomatisierungsanlage. Damit wird die Gesamtfunktion der Konzentratoreinrichtung und der Anlagensteuereinrichtung nicht beeinträchtigt. Das Engineering auf Dateibasis (bei IEC 61850 z.B. in Form einer Substation Configuration Description (SCD)) entfällt und die damit verbundenen Im- und Exporte der Konfigurationsdateien werden vermieden.

## Patentansprüche

1. Verfahren zum Betreiben einer Energieautomatisierungsanlage (10), die eine Mehrzahl von Energieautomatisierungsgeräten (13a-c) und zumindest eine übergeordnete Anlagensteuereinrichtung (11) zum Steuern und/oder Überwachen der Energieautomatisierungsgeräte (13a-c) umfasst,
derart ausgestaltet, dass die Energieautomatisierungsgeräte (13a-c) mit der Anlagensteuereinrichtung (11) über eine Konzentratoreinrichtung (12) verbunden sind und in einer Speichereinrichtung der Konzentratoreinrichtung (12) eine ein Konzentratordatenmodell enthaltende Datenmodelldatei gespeichert ist, wobei das Konzentratordatenmodell Angaben über die mit der Konzentratoreinrichtung (12) verbundenen Energieautomatisierungsgeräte (13a-c), deren Funktionen und Einstellungen umfasst sowie Datenobjekte bereitstellt, deren Zustände an die aktuellen Zustände entsprechender Datenobjekte der Energieautomatisierungsgeräte (13a-c) angepasst werden, und wobei bei dem Verfahren die folgenden Schritte durchgeführt werden:
- Verbinden eines zusätzlichen Energieautomatisierungsgerätes (13d) mit der Konzentratoreinrichtung (12);
- Erzeugen einer Kommunikationsadresse für das zusätzliche Energieautomatisierungsgerät (13d) durch die Konzentratoreinrichtung (12) und Übermitteln der Kommunikationsadresse an das zusätzliche Energieautomatisierungsgerät (13d);
- Speichern der Kommunikationsadresse im zusätzlichen Energieautomatisierungsgerät (13d) und Verwenden der Kommunikationsadresse für die weitere Kommunikation mit der Konzentratoreinrichtung (12);
- Abrufen einer Gerätebeschreibungsdatei von dem Energieautomatisierungsgerät (13d) durch die Konzentratoreinrichtung (12), die Funktionen und Einstellungen des zusätzlichen Energieautomatisierungsgerätes (13d) angibt;
- Anpassen des Konzentratordatenmodells an die durch die Gerätebeschreibungsdatei angegebenen Funktionen und Einstellungen des zusätzlichen Energieautomatisierungsgerätes (13d); und
- Bereitstellen des angepassten Konzentratordatenmodells für die Anlagensteuereinrichtung (11).

2. Verfahren nach Anspruch 1,
**dadurch gekennzeichnet, dass**
- die Anlagensteuereinrichtung (11) vor dem Verbinden des zusätzlichen Energieautomatisierungsgerätes (13d) mit der Konzentratoreinrichtung (12) eine Benutzereingabe erfasst, die eine Gerätekennung des zusätzlichen Energieautomatisierungsgerätes (13d) angibt;
- nach dem Verbinden des zusätzlichen Energieautomatisierungsgerätes (13d) mit der Konzentratoreinrichtung (12) das zusätzliche Energieautomatisierungsgerät (13d) seine Gerätekennung an die Konzentratoreinrichtung (12) übermittelt;
- die Konzentratoreinrichtung (12) die von dem zusätzlichen Energieautomatisierungsgerät (13d) übermittelte Gerätekennung an die Anlagensteuereinrichtung (11) sendet;
- die Anlagensteuereinrichtung (11) prüft, ob die von der Konzentratoreinrichtung (12) übermittelte Gerätekennung mit der benutzerseitig eingegebenen Gerätekennung übereinstimmt und bei übereinstimmender Gerätekennung ein Bestätigungstelegramm an die Konzentratoreinrichtung (12) sendet; und
- die Konzentratoreinrichtung (12) nur dann die Gerätebeschreibungsdatei von dem zusätzlichen Energieautomatisierungsgerät (13d) abruft, wenn das Bestätigungstelegramm vorliegt.

3. Verfahren nach Anspruch 1 oder 2,
**dadurch gekennzeichnet, dass**
- die Anlagensteuereinrichtung (11) eine ein Anlagendatenmodell enthaltende Anlagendatenmodelldatei umfasst, wobei das Anlagendatenmodell Angaben über alle Energieautomatisierungsgeräte (13a-d) der Energieautomatisierungsanlage (10), deren Funktionen und Einstellungen umfasst sowie Datenobjekte bereitstellt, deren Zustände an die aktuellen Zustände entsprechender Datenobjekte der Eriergieautomatisierungsgeräte (13a-d) angepasst werden;
- die Anlagensteuereinrichtung (11) ihr Anlagendatenmodell an die durch das Konzentratordatenmodell angegebenen Funktionen und Einstellungen des zusätzlichen Energieautomatisierungsgerätes (13d) anpasst; und
- im Betrieb der Energieautomatisierungsanlage (10) eine Änderung eines Zustands eines Datenobjektes eines mit der Konzentratoreinrichtung (12) verbundenen Energieautomatisierungsgerätes (13a-d) eine entsprechende Änderung der Zustände der entsprechenden Datenobjekte des Konzentratordatenmodells und des Anlagendatenmodells bewirkt.

4. Verfahren nach Anspruch 3,
**dadurch gekennzeichnet, dass**
- die Anlagensteuereinrichtung (11) zunächst die in dem Konzentratordatenmodell enthaltenen Angaben über Funktionen und Einstellungen des zusätzlichen Energieautomatisierungsgerätes (13d) daraufhin überprüft, ob diese mit dem Anlagendatenmodell kompatibel sind;
- die Anlagensteuereinrichtung (11) erst bei vorliegender Kompatibilität das Anlagendatenmodell an das Konzentratordatenmodell anpasst und ein Aktivierungstelegramm an die Konzentratoreinrichtung (12) sendet; und
- die Konzentratoreinrichtung (12) erst bei vorliegendem Aktivierungstelegramm das zusätzliche Energieautomatisierungsgerät (13d) in den Betrieb der Energieautomatisierungsanlage (10) einbindet.

5. Verfahren nach einem der vorangehenden Ansprüche,
**dadurch gekennzeichnet, dass**
- beim Entfernen eines Energieautomatisierungsgerätes (13a-d) aus der Energieautomatisierungsanlage (10) die Konzentratoreinrichtung (12) die fehlende Verbindung zu dem entfernten Energieautomatisierungsgerät (13a-d) erkennt und sein Konzentratordatenmodell durch Entfernen der Einträge für das entfernte Energieautomatisierungsgerät (13a-d) anpasst und das angepasste Konzentratordatenmodell an die Anlagensteuereinrichtung (11) übermittelt; und
- die Anlagensteuereinrichtung (11) ihr Anlagendatenmodell durch Entfernen der Einträge für das entfernte Energieautomatisierungsgerät anpasst (13a-d).

6. Verfahren nach einem der vorangehenden Ansprüche,
**dadurch gekennzeichnet, dass**
- die Gerätebeschreibungsdatei der Energieautomatisierungsgeräte (13a-c) und des zusätzlichen Energieautomatisierungsgerätes (13d) in Form einer ICD-Datei oder einer IID-Datei gemäß dem Standard IEC 61850 angegeben wird.

7. Verfahren nach einem der vorangehenden,
**dadurch gekennzeichnet, dass**
- das Konzentratordatenmodell der Konzentratoreinrichtung (12) in Form einer SCD-Datei gemäß dem Standard IEC 61850 angegeben wird.

8. Verfahren nach einem der Ansprüche 3 bis 7,
**dadurch gekennzeichnet, dass**
- das Anlagendatenmodell der Anlagensteuereinrichtung (11) in Form einer SCD-Datei gemäß dem Standard IEC 61850 angegeben wird.

9. Energieautomatisierungsanlage (10) mit einer Mehrzahl von Energieautomatisierungsgeräten (13a-c) und zumindest einer Anlagensteuereinrichtung (11) zum Steuern und/oder Überwachen der Energieautomatisierungsgeräte (13a-c),
derart ausgestaltet, dass die Energieautomatisierungsgeräte (13a-c) mit der Anlagensteuereinrichtung (11) über eine Konzentratoreinrichtung (12) verbunden sind, und
- die Energieautomatisierungsanlage (10) zur Durchführung eines Verfahrens gemäß einem der Ansprüche 1 bis 8 eingerichtet ist.

## Claims

1. Method for operating a power automation installation (10) which comprises a plurality of power automation devices (13a-c) and at least one higher-level installation control device (11) for controlling and/or monitoring the power automation devices (13a-c), designed such that the power automation devices (13a-c) are connected to the installation control device (11) by a concentrator device (12) and a data model file containing a concentrator data model is stored in a memory device of the concentrator device (12), wherein the concentrator data model comprises information about the power automation devices (13a-c) connected to the concentrator device (12), their functions and settings as well as provides data objects whose states are adapted to the current states of corresponding data objects of the power automation devices (13a-c) and wherein the following steps are carried out in the method:
- Connection of an additional power automation device (13d) to the concentrator device (12);
- Generation of a communication address for the additional power automation device (13d) by the concentrator device (12) and transmission of the communication address to the additional power automation device (13d);
- Storage of the communication address in the additional power automation device (13d) and use of the communication address for further communication with the concentrator device (12);
- Retrieval of a device description file of the power automation device (13d) by the concentrator device (12), said file specifying the functions and settings of the additional power automation device (13d);
- Adaptation of the concentrator data model to the functions and settings of the additional power automation device specified by the device description file (13d); and
- Provision of the adapted concentrator data model for the installation control device (11).

2. Method according to claim 1,
**characterised in that**
- the installation control device (11) records a user input prior to connecting the additional power automation device (13d) to the concentrator device (12), said user input specifying a device code of the additional power automation device (13d);
- after connection of the additional power automation device (13d) to the concentrator device (12), the additional power automation device (13d) transmits its device code to the concentrator device (12);
- the concentrator device (12) sends the device code transmitted by the additional power automation device (13d) to the installation control device (11);
- the installation control device (11) checks whether the device code transmitted by the concentrator device (12) matches the device code entered by the user and, in the case of a matching device code sends a confirmation telegram to the concentrator device (12); and
- the concentrator device (12) only then retrieves the device description file from the additional power automation device (13d) when the confirmation telegram is on hand.

3. Method according to claim 1 or 2,
**characterised in that**
- the installation control device (11) comprises an installation data model file containing an installation data model, wherein the installation data model provides information about all power automation devices (13a-d) of the power automation installation (10) whose functions and settings comprise as well as provide data objects, whose states are adapted to the current states of corresponding data objects of the power automation devices (13a-d) ;
- the installation control device (11) adapts its installation data model to the functions and settings of the additional power automation device (13d) specified by the concentrator data model; and
- in the operation of the power automation installation (10), a change of state of a data object of a power automation device (13a-d) connected to the concentrator device (12) brings about a corresponding change of the states of the corresponding data objects of the concentrator data model and of the installation data model.

4. Method according to claim 3,
**characterised in that**
- the installation control device (11) first checks the information contained in the concentrator data model about functions and settings of the additional power automation device (13d) to determine whether said functions and settings are compatible with the installation data model;
- the installation control device (11) adapts the installation data model to the concentrator data model and sends an activation telegram to the concentrator device (12) only in the event of existing compatibility; and
- the concentrator device (12) only integrates the additional power automation device (13d) in the operation of the power automation installation (10) in the case of an existing activation telegram.

5. Method according to one of the preceding claims,
**characterised in that**
- in the event of the removal of a power automation device (13a-d) from the power automation installation (10) the concentrator device (12) detects the missing connection to the removed power automation device (13a-d) and adapts its concentrator data model by deleting the entries for the removed power automation device (13a-d) and transmits the adapted concentrator data model to the installation control device (11); and
- the installation control device (11) adapts its installation data model by deleting the entries for the removed power automation device (13a-d).

6. Method according to one of the preceding claims,
**characterised in that**
- the device description file of the power automation device (13a-c) and of the additional power automation device (13d) is specified in the form of an ICD file or IID file in accordance with the IEC 61850 standard.

7. Method according to one of the preceding claims,
**characterised in that**
- the concentrator data model of the concentrator device (12) is specified in the form of an SCD file in accordance with the IEC 61850 standard.

8. Method according to one of claims 3 to 7,
**characterised in that**
- the installation data model of the installation control device (11) is specified in the form of an SCD file in accordance with the IEC 61850 standard.

9. Power automation installation (10) with a plurality of power automation devices (13a-c) and at least one installation control device (11) for controlling and/or monitoring the power automation devices (13a-c), designed such that the power automation devices (13a-c) are connected to the installation control device (11) by a concentrator device (12), and
- the power automation installation (10) is set up for carrying out a method according to one of claims 1 to 8.

## Revendications

1. Procédé pour faire fonctionner une installation (10) d'automatisation d'énergie, qui comprend une pluralité d'appareils (13a-c) d'automatisation d'énergie et au moins un dispositif (11) de commande d'installation supérieur hiérarchiquement pour commander et/ou pour contrôler les appareils (13a-c) d'automatisation d'énergie,
la conformation étant telle que les appareils (13a-c) d'automatisation d'énergie sont reliés au dispositif (11) de commande d'installation par un concentrateur (12) et un fichier de modèles de données, contenant un modèle de données de concentrateur, est mémorisé dans un dispositif de mémorisation du concentrateur (12), le modèle de données de concentrateur comprenant des indications sur les appareils (13a-c) d'automatisation d'énergie reliés au concentrateur (12), leurs fonctions et leurs réglages, ainsi que mettant à disposition des objets de données dont les états sont adaptés à des objets de données correspondant aux états instantanés des appareils (13a-c) d'automatisation d'énergie et dans lequel, dans le procédé, on effectue les stades suivants :
- liaison d'un appareil (13d) d'automatisation d'énergie supplémentaire au concentrateur (12);
- production d'une adresse de communication de l'appareil (13d) d'automatisation d'énergie supplémentaire par le concentrateur (12) et transmission de l'adresse de communication à l'appareil (13d) d'automatisation d'énergie supplémentaire;
- mémorisation de l'adresse de communication dans l'appareil (13d) d'automatisation d'énergie supplémentaire et utilisation de l'adresse de communication pour continuer à communiquer avec le concentrateur (12);
- appel d'un fichier de description de l'appareil (13d) d'automatisation d'énergie par le concentrateur (12), qui indique les fonctions et les réglages de l'appareil (13d) d'automatisation d'énergie supplémentaire;
- adaptation du modèle de données de concentrateur aux fonctions et réglages, indiqués par le fichier de description d'appareil, de l'appareil (13d) d'automatisation d'énergie supplémentaire et
- mise à disposition du dispositif (11) de commande d'installation du modèle adapté de données de concentrateur.

2. Procédé suivant la revendication 1,
**caractérisé en ce que**
- le dispositif (11) de commande d'installation détecte, avant la liaison de l'appareil (13d) d'automatisation d'énergie supplémentaire au concentrateur (12), une entrée d'utilisateur, qui indique une caractéristique de l'appareil (13d) d'automatisation d'énergie supplémentaire;
- après la liaison de l'appareil (13d) d'automatisation d'énergie supplémentaire au concentrateur (12), l'appareil (13d) d'automatisation d'énergie supplémentaire transmets sa caractéristique d'appareil au concentrateur (12);
- le concentrateur (12) envoie, au dispositif (11) de commande d'installation, la caractéristique d'appareil transmise par l'appareil (13d) d'automatisation d'énergie supplémentaire;
- le dispositif (11) de commande d'installation contrôle si la caractéristique d'appareil, transmise par le concentrateur (12), coïncide avec la caractéristique d'appareil entrée par l'utilisateur et, si la caractéristique d'appareil coïncide, envoie un télégramme de confirmation au concentrateur (12) et
- le concentrateur (12) n'appelle le fichier de description d'appareil de l'appareil (13d) d'automatisation d'énergie supplémentaire, que s'il y a le télégramme de confirmation.

3. Procédé suivant la revendication 1 ou 2,
**caractérisé en ce que**
- le dispositif (11) de commande d'installation comprend un fichier de modèles de données d'installation contenant un modèle de données d'installation, le modèle de données d'installation comprenant des indications sur tous les appareils (13a-d) d'automatisation d'énergie de l'installation (10) d'automatisation d'énergie, leurs fonctions et leurs réglages, ainsi que met à disposition des objets de données, dont les états sont adaptés aux objets de données, correspondant aux états instantanés, des appareils (13a-d) d'automatisation d'énergie;
- le dispositif (11) de commande d'installation adapte son modèle de données d'installation aux fonctions et réglages, indiqués par le modèle de données de concentrateur, de l'appareil (13d) d'automatisation d'énergie supplémentaire et
- alors que l'installation (10) d'automatisation d'énergie est en fonctionnement, une modification d'un état d'un objet de données d'un appareil (13a-d) d'automatisation d'énergie relié au concentrateur (12) provoque une modification correspondante des états des objets de données correspondants du modèle de données de concentrateur et du modèle de données d'installation.

4. Procédé suivant la revendication 3,
**caractérisé en ce que**
- le dispositif (11) de commande d'installation contrôle d'abord les indications contenues dans le modèle de données de concentrateur sur des fonctions et des réglages de l'appareil (13d) d'automatisation d'énergie supplémentaire pour savoir s'ils sont compatibles avec le modèle de données d'installation;
- le dispositif (11) de commande d'installation, seulement s'il y a compatibilité, adapte le modèle de données d'installation au modèle de données de concentrateur et envoie un télégramme d'activation au concentrateur (12) et
- le concentrateur (12), seulement en présence du télégramme d'activation, incorpore l'appareil (13d) d'automatisation d'énergie supplémentaire dans le fonctionnement de l'installation (10) d'automatisation d'énergie.

5. Procédé suivant l'une des revendications précédentes,
**caractérisé en ce que**
- si un appareil (13a-d) d'automatisation d'énergie s'éloigne de l'installation (10) d'automatisation d'énergie, le concentrateur (12) détecte la liaison défectueuse à l'appareil (13a-d) d'automatisation d'énergie éloigné et adapte son modèle de données de concentrateur en retirant les chargements pour l'appareil (13a-d) d'automatisation d'énergie éloigné et transmet le modèle de données de concentrateur adapté au dispositif (11) de commande d'installation et
- le dispositif (11) de commande d'installation adapte (13a-d) son modèle de données d'installation en retirant les chargements pour l'appareil d'automatisation d'énergie éloigné.

6. Procédé suivant l'une des revendications précédentes,
**caractérisé en ce que**
- les fichiers de description des appareils (13a-c) d'automatisation d'énergie et de l'appareil (13d) d'automatisation d'énergie supplémentaire sont indiqués sous la forme d'un fichier ICD ou d'un fichier IID suivant la norme IEC 61850.

7. Procédé suivant l'une des revendications précédentes, **caractérisé en ce que**
- le modèle de données de concentrateur du concentrateur (12) est indiqué sous la forme d'un fichier SCD suivant la norme IEC 61850.

8. Procédé suivant l'une des revendications 3 à 7,
**caractérisé en ce que**
- le modèle de données d'installation du dispositif (11) de commande d'installation est indiqué sous la forme d'un fichier SCD suivant la norme IEC 61850.

9. Installation (10) d'automatisation d'énergie ayant une pluralité d'appareils (13a-c) d'automatisation d'énergie et au moins un dispositif (11) de commande d'installation pour commander et/ou contrôler les appareils (13a-c) d'automatisation d'énergie,
la conformation étant telle que les appareils (13a-c) d'automatisation d'énergie sont reliés au dispositif (11) de commande d'installation par un concentrateur (12) et
- l'installation (10) d'automatisation d'énergie est conçue pour effectuer un procédé suivant l'une des revendications 1 à 8.
